# EUROPEAN PATENT SPECIFICATION

(11) **EP 2 785 079 B1**
(45) Date of publication and mention of the grant of the patent: **30.05.2018**
(21) Application number: 14161487.5
(22) Date of filing: 25.03.2014
(51) Int. Cl.: H04W 64/00, H04W 4/02

(54) **Location-specific wlan information provision method in cell of wireless communication system**
Ortsspezifisches WLAN-Informationsbereitstellungsverfahren in Zellen eines drahtlosen Kommunikationssystems
Procédé de fourniture d'informations wlan spécifiques dans une cellule du système de communication sans fil

(30) Priority: 25.03.2013 KR 20130031327
(43) Date of publication of application: 01.10.2014
(73) Proprietor: Samsung Electronics Co., Ltd., Suwon-si Gyeonggi-do 443-742 (KR)
(72) Inventor: Jang, Jaehyuk, 443-742 Gyeonggi-do (KR); Kim, Wooseong, 443-742 Gyeonggi-do (KR); Jeong, Kyeongin, 443-742 Gyeonggi-do (KR); Kim, Sangbum, 443-742 Gyeonggi-do (KR); Kim, Soenghun, 443-742 Gyeonggi-do (KR)
(74) Representative: Nederlandsch Octrooibureau

(56) References cited:
- US-A1- 2010 195 632
- US-A1- 2011 286 437

## Description

### TECHNICAL FIELD

The present disclosure relates to a wireless communication system. More particularly, the present disclosure relates to a method for providing the terminals with Wireless Local Area Network (WLAN) information in a system supporting interoperation between the 3rd Generation Partnership Project (3GPP) system (e.g. Universal Mobile Telecommunications System (UMTS)) and Long Term Evolution (LTE) system) and WLAN in such a way that the terminals scan WLANs in proximity to the terminals and report the WLAN informations to the 3GPP system which transmits the WLAN informations to the terminals.

### BACKGROUND

Currently, the wireless communication technology and communication system technology have evolved dramatically, and Long Term Evolution (LTE) system is one of the most promising 4th Generation Mobile communication systems evolved from the Universal Mobile Telecommunications System (UMTS) as the representative 3rd Generation (3G) mobile communication system.

With the popularization of smartphones, user data traffic has increased significantly and thus the mobile carriers are striving to distribute the increased amount of user data in the legacy mobile communication networks (i.e. 3G and 4G cellular networks) through interoperation with Wireless Local Area Networks (WLANs).

However, the interoperation between the cellular network and WLAN has yet to reach sufficient levels. That is, the current cellular network and WLAN operate independently with the exception of some restricted functions (e.g. authentication).

For this reason, the terminal which wants to use any WLAN has to search for nearby WLANs constantly, resulting in power consumption. Furthermore, this brings another problem in that the WLAN module of the terminal has to be constantly in a turn-on state.

In order to solve the above problems, it is required for the base station of a cellular network to collect the information on the WLAN Access Points (APs) within the cell coverage and provides the terminals with the collected WLAN AP information. In the case where the cell coverage is large and there are a plurality of WLAN APs within the cell, however, the AP list transmitted by the base station becomes longer causing a waste of resources and, if the APs operate on different WLAN channels, the terminal has to scan all available channels and thus the AP list becomes useless for AP scanning. There is therefore a need of a method capable of solving these problems.

Accordingly, a location-specific Wireless Local Area Network (WLAN) information provision method and apparatus that is capable of allowing the network to assist the nearby WLAN discovery of the terminal in the cellular network in the system supporting interoperation between the cellular network (e.g. Universal Mobile Telecommunications System (UMTS) and Long Term Evolution (LTE)) and the WLAN (including location area communication technologies based on IEEE802.11) is desired.

The above information is presented as background information only to assist with an understanding of the present disclosure. No determination has been made, and no assertion is made, as to whether any of the above might be applicable as prior art with regard to the present disclosure.

US 2011/286437 A1 discloses a Wi-Fi transceiver on a mobile device which is activated when certain conditions are met, such as a time, location, recognition of a radio frequency (RF) environment, etc. The conditions are correlated with a database of known locations in which a one or more Wi-Fi access points are determined to exist. The Wi-Fi transceiver on the mobile device is activated and commanded to connect to a particular Wi-Fi access point.

US 201 0/1 95632 A1 discloses methods and systems for detecting one or more access points in a wireless network. The location coordinates of a wireless communication device (WCD) are first determined. Based on comparisons made with the WCD location coordinates, if the WCD is within range of a WLAN access point and remains stationary for a preset time interval, a WLAN radio interface may be activated within the WCD to connect to the WLAN via the access point.

### SUMMARY

Aspects of the present disclosure are to address at least the above-mentioned problems and/or disadvantages and to provide at least the advantages described below. Accordingly, an aspect of the present disclosure is to provide a location-specific Wireless Local Area Network (WLAN) information provision method and apparatus that is capable of allowing the network to assist the nearby WLAN discovery of the terminal in the cellular network in the system supporting interoperation between the cellular network (e.g. Universal Mobile Telecommunications System (UMTS) and Long Term Evolution (LTE)) and the WLAN (including location area communication technologies based on IEEE. 802.11).

In accordance with an aspect of the present disclosure, a data communication method of a terminal of a mobile communication system is provided. The data communication method includes transmitting a first message including location-related information of the terminal to a base station, receiving a second message including a WLAN Access Point (AP) list corresponding to the location-related information of the terminal, and scanning, when the WLAN AP list includes at least one WLAN AP, for WLAN APs included in the WLAN AP list.

In accordance with an aspect of the present disclosure, a data communication method of a base station of a mobile communication system is provided. The data communication method includes receiving a first message including a location-related information of a terminal from the terminal and transmitting a second message including a WLAN AP list corresponding to the location-related information of the terminal. The terminal scans, when the WLAN AP list includes at least one WLAN AP, for WLAN APs included in the WLAN AP list.

In accordance with an aspect of the present disclosure, a terminal of a mobile communication system is provided. The terminal includes a transceiver configured to transmit a first message including location-related information of the terminal to a base station and receive a second message including a WLAN AP list corresponding to the location-related information of the terminal and a controller configured to scan, when the WLAN AP list includes at least one WLAN AP, for WLAN APs included in the WLAN AP list.

In accordance with an aspect of the present disclosure, a base station of a mobile communication system is provided. The base station includes a transceiver configured to receive a first message including a location-related information of a terminal from the terminal, and a controller configured to control the transceiver to transmit a second message including a WLAN AP list corresponding to the location-related information of the terminal, wherein the terminal scans, when the WLAN AP list includes at least one WLAN AP, for WLAN APs included in the WLAN AP list.

Other aspects, advantages, and salient features of the disclosure will become apparent to those skilled in the art from the following detailed description, which, taken in conjunction with the annexed drawings, discloses various embodiments of the present disclosure

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a diagram illustrating an architecture of a Long Term Evolution (LTE) system according to an embodiment of the present disclosure;
FIG. 2 is a diagram illustrating a protocol stack of an LTE system according to an embodiment of the present disclosure;
FIG. 3 is a message flow diagram illustrating message flows between an User Equipment (UE) and an evolved Node B (eNB) according to an embodiment of the present disclosure;
FIGS. 4A and 4B are flowcharts illustrating UE procedures according to an embodiment of the present disclosure;
FIGS. 5A and 5B are flowcharts illustrating eNB procedures according to an embodiment of the present disclosure;
FIG. 6 is a message flow diagram illustrating message follows between an UE and an eNB according to an embodiment of the present disclosure;
FIGS. 7A and 7B are flowcharts illustrating an UE procedure according to an embodiment of the present disclosure;
FIGS. 8A and 8B are flowcharts illustrating eNB procedures according to an embodiment of the present disclosure;
FIG. 9 is a block diagram illustrating a configuration of an UE according to an embodiment of the present disclosure; and
FIG. 10 is a block diagram illustrating a configuration of an eNB according to an embodiment of the present disclosure.
The same reference numerals are used to represent the same elements throughout the drawings.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein may be made without departing from the scope of the claims. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure.

It is to be understood that the singular forms "a," "an," and "the" include plural referents unless the context clearly dictates otherwise. Thus, for example, reference to "a component surface" includes reference to one or more of such surfaces.

For the same reason, some of elements are exaggerated, omitted or simplified in the drawings. Also, the elements may have sizes and/or shapes different from those shown in drawings, in practice. The same reference numbers are used throughout the drawings to refer to the same or like parts. Although the description is directed to the Long Term Evolution(LTE) system as a cellular network for convenience purpose, the present disclosure is applicable to other types of cellular networks (e.g. Universal Mobile Telecommunications System (UMTS)).

Throughout an embodiment, the Wireless Local Area Network(WLAN)Access Point (AP) information reported from the terminal to the base station may include the bandwidth used by the measured WLAN AP and signal strength of the measured WLAN AP. The base station may transmit the WLAN AP information including the information on the location of the WLAN AP and bandwidth used by the WLAN AP.

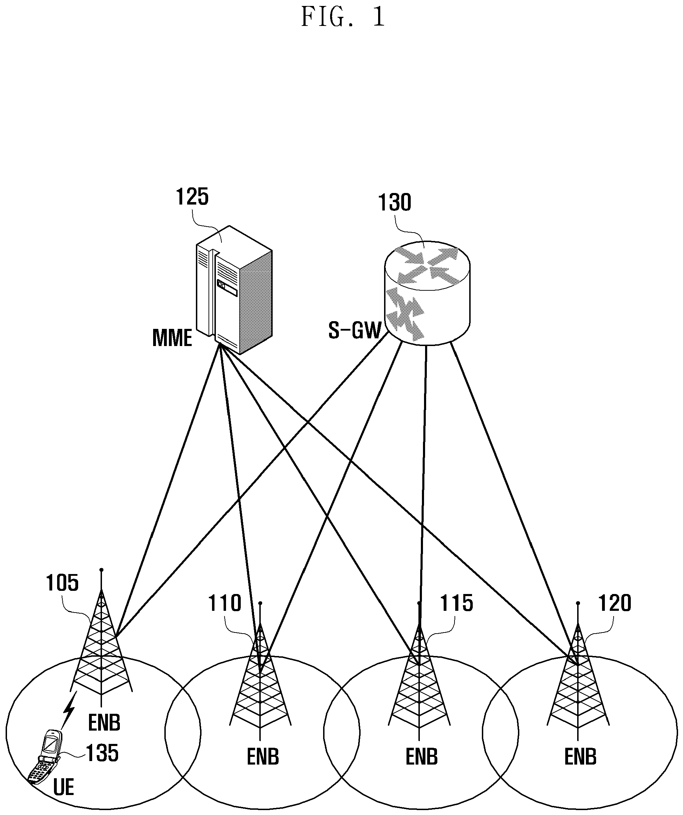

FIG. 1 is a diagram illustrating the architecture of an LTE system according to an embodiment of the present disclosure.

Referring to FIG. 1, the radio access network of the mobile communication system includes evolved Node Bs (eNBs) 105, 110, 115, and 120, a Mobility Management Entity (MME) 125, and a Serving-Gateway (S-GW) 130. The User Equipment (hereinafter, referred to as UE) 135 connects to an external network via eNBs 105, 110, 115, and 120 and the S-GW 130.

Referring to FIG. 1, the eNBs 105, 110, 115, and 120 correspond to legacy node Bs of the UMTS system. The eNBs 105, 110, 115, and 120 allow the UE to establish a radio link and are responsible for complicated functions as compared to the legacy node B. In the LTE system, all the user traffic including real time services such as Voice over Internet Protocol (VoIP) are provided through a shared channel and thus there is a need of a device which is located in the eNB to schedule data based on the state information, such as UE buffer conditions, power headroom state, and channel state. Typically, one eNB controls a plurality of cells. In order to secure the data rate of up to 100Mbps, the LTE system adopts Orthogonal Frequency Division Multiplexing (OFDM) as a radio access technology on the bandwidth of 20 MHz. Also, the LTE system adopts Adaptive Modulation and Coding (AMC) to determine the modulation scheme and channel coding rate in adaptation to the channel condition of the UE. The S-GW 130 is an entity to provide data bearers so as to establish and release data bearers under the control of the MME 125. MME 125 is responsible for various control functions and connected to a plurality of eNBs 105, 110, 115, and 120.

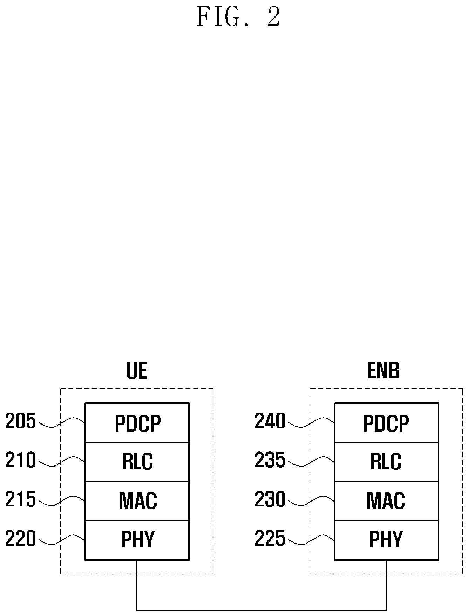

FIG. 2 is a diagram illustrating a protocol stack of an LTE system according to an embodiment of the present disclosure.

Referring to FIG. 2, the protocol stack of the LTE system includes Packet Data Convergence Protocol (PDCP) 205 and 240, Radio Link Control (RLC) 210 and 235, Medium Access Control (MAC) 215 and 230, and Physical (PHY) 220 and 225. The PDCP 205 and 240 is responsible for IP header compression and/or decompression, and the RLC 210 and 235 is responsible for segmenting the PDCP Protocol Data Unit (PDU) into segments in an appropriate size. The MAC 215 and 230 are responsible for establishing a connection to a plurality of RLC entities so as to multiplex the RLC PDUs into MAC PDUs and demultiplex the MAC PDUs into RLC PDUs. The PHY 220 and 225 performs channel coding on the MAC PDU and modulates the MAC PDU into OFDM symbols to transmit over radio channel and/or performs demodulating and channel-decoding on the received OFDM symbols and delivers the decoded data to the higher layer. Also, the PHY layer uses Hybrid ARQ (HARQ) for additional error correction by transmitting 1 bit information indicating for positive and/or negative acknowledgement from the receiver to the transmitter. This is referred to as HARQ ACK/NACK information. The downlink HARQ ACK/NACK corresponding to the uplink transmission is carried by Physical Hybrid-ARQ Indicator Channel (PHICH), and the uplink HARQ ACK/NACK corresponding to downlink transmission is carried by Physical Uplink Control Channel (PUCCH) and/or Physical Uplink Shared Channel (PUSCH).

As described above, if a UE wants to use a nearby WLAN in a system where the LTE system and WLAN coexist, the UE has to scans for nearby WLANs continuously because the UE does not know the location of any WLAN, resulting in power consumption. In order to solve this problem, the eNB collects the information on the WLAN APs present in the eNB's cell coverage and provides the UE with the WLAN AP information. In the case where the cell coverage area is large and there is a plurality of WLAN APs within the cell, the AP list transmitted by the base station may become too large causing a waste of resources. Furthermore, if the APs operate on different WLAN channels, the terminal has to scan all available channels and thus the AP list becomes useless for AP scanning. There is therefore a need of a method capable of solving these problems.

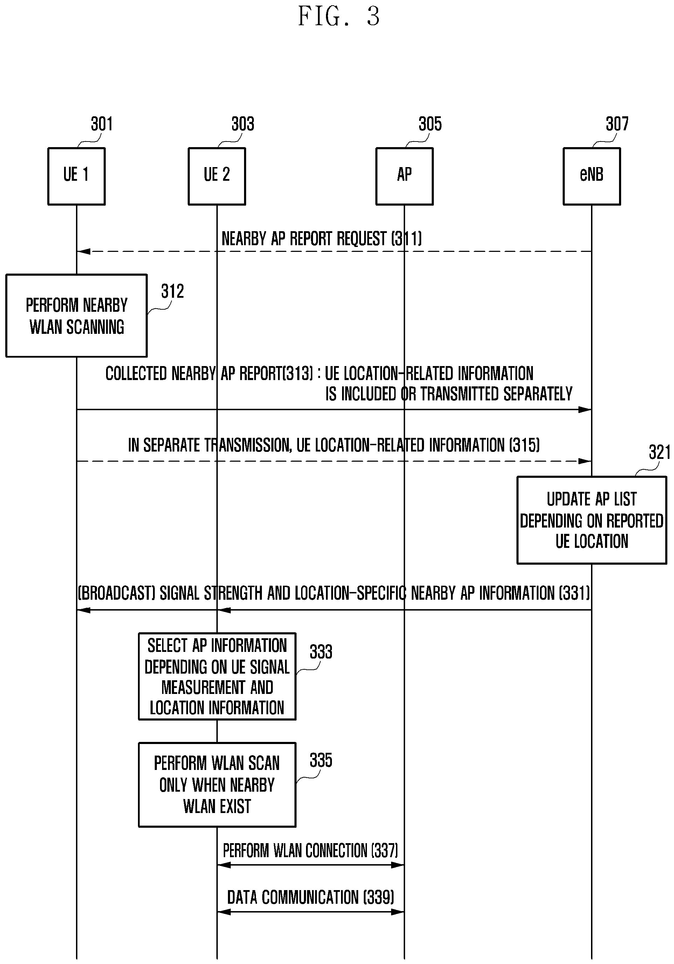

FIG. 3 is a message flow diagram illustrating message flows between a UE and an eNB according to an embodiment of the present disclosure.

Referring to FIG. 3, the UEs 301 and 303 communicate data with the eNB 307, and a WLAN AP 305 is located at a position capable of communicating with the UEs 301 and 303.

According to this embodiment, the eNB 307 requests the UE 301 to scan for WLANs at operation 311. Depending on the embodiment, the scan request process may be performed optionally, and the UE may report the information on the WLAN APs in proximity to the UE 301without receipt of any request.

At operation 312, the UE 301 which has received the request at operation 311 scans for WLANs and generates the information on the found WLAN APs. The WLAN AP information may include at least one of WLAN AP ID (SSID, BSSID), location of WLAN AP, and signal strength of WLAN AP.

In an embodiment, the UE 301 may scan for WLAN without receipt of the request from the eNB. The WLAN scan may be performed in response to a user input and/or setting, and the UE 301 may store at least one of a WLAN AP list listing the WLANs to which the UE 301 has connected before and locations and signal strengths of the WLANs to which the UE 301 has connected before. According to an embodiment of the present disclosure, if a request is received from the eNB 307, the UE 301 may report at least one of the stored information to the eNB 307.

The UE 301 reports the information on the nearby WLAN APs at operation 313. According to an embodiment, the WLAN AP information may include the information on the WLAN AP 307. The UE 301 may report its current location-related information along with the WLAN AP information.

In an embodiment, in order for the UE 301 to report the collected WLAN AP information to the eNB 307, a Radio Resource Control (RRC) layer message of the 3GPP network may be used. The location-related information may include the following informations.
- Signal strength from current serving eNB 307
   One eNB may have a plurality of antennas, and the antennas may transmit different CSI-RSs. Accordingly, if the UE measures and reports signal strengths of respective CSI-RSs, the eNB is capable of determining the antenna in proximity to the current UE so as to locate the UE.
   Strength of another signal received from one eNB.
- Signal strengths from current serving eNB and neighbor eNBs (RF fingerprint)
   If the UE reports signal strengths from a plurality of eNBs, the eNB is capable of determining the eNB nearby the UE so as to locate the UE.
- Location information of current UE (UE is capable of acquiring location information as follows)
   Current location is acquired based on the signal of Global Navigation Satellite System (GNSS) including other systems such as Global Positioning System (GPS) of the United States of America and Galileo of Europe
   Current location is acquired based on the location signal transmitted by 3GPP eNB
   Current location is acquired based on the location calculated through difference of arrivals of signals from plural eNBs (referred to as Observed Time Difference Of Arrival (OTDOA))
   Current location is acquired based on signal strength from current eNB and downlink and uplink transmission difference (referred to as Enhanced Cell Identifier (E-CID) method)
- Received signal strength from the at least one WLAN AP discovered by the UE
   Or, the above location-related informations may be transmitted to the eNB 307 along with and/or independently of the message reporting the list of the nearby WLAN APs at operation 315.

If at least one of the messages transmitted at 313 and 315 is received, the eNB 307 is capable of generating and/or updating the WLAN AP list differently depending on the location of the UE within the cell coverage of the eNB 307 based on the current UE location-related information and WLAN AP information reported by the UE 301 at operation 321. In more detail, the eNB 307 calculates the location of the UE 301 based on the signal strength of the cellular network which the UE 301 has measured and reported, and sorts the locations informations into intra-cell WLAN AP list and nearby WLAN AP list.

The eNB 307 may transmit to the UEs 301 and 303 within the cell the nearby WLAN AP information based on the signal strength from the eNB 307 and the UE location. According to an embodiment, the information may be broadcast. For example, if the UE location-related information is the signal strength from the eNB(s), the eNB transmits a list of the WLAN APs available for searching, per signal strength. If the UE location-related information is the current UE location information, the eNB may transmits a list of the WLAN APs generated based on a radius of UE location. The list may be transmitted using a predetermined System Information Block (SIB) of the 3GPP system.

If the signal strength-specific and UE location-specific AP information are received at operation 331 and if the signal strength from the eNB 307 and/or the location of the UE 303 is calculated, the UE 303 may determine the WLAN APs to perform scanning therefor in proximity to the UE based on the message transmitted by the eNB 307 according to the location of the UE 303 at operation 333. In more detail, the UE 303 determines the list of the WLAN APs connectable per location based on the information received at operation 331 and calculates the location of the UE 303 to select the WLAN AP to which the UE 303 may connect among the list of the WLAN APs.

At operation 335, the UE 303 may perform WLAN discovery on the WLAN APs which the UE 303 determines are nearby in the nearby WLAN AP list received at operation 331. If it is determined that there is no nearby WLAN APs, the UE 303 may skip performing WLAN AP scan even though its WLAN module is turned on, thereby reducing power consumption of the UE 203.

If it is determined that there is any WLAN AP 305 to which the UE may connect in the WLAN scanning process, the UE 303 performs authentication and association procedure with the corresponding WLAN AP 305 at operation 337 and, if this procedure is successful, performs data communication with the corresponding WLAN AP 305 at operation 339.

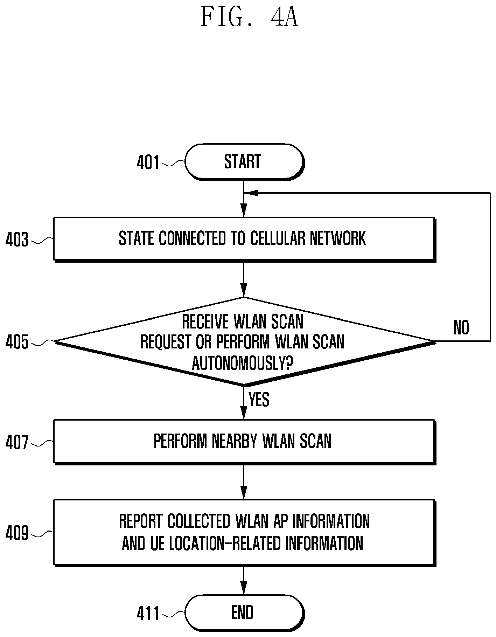

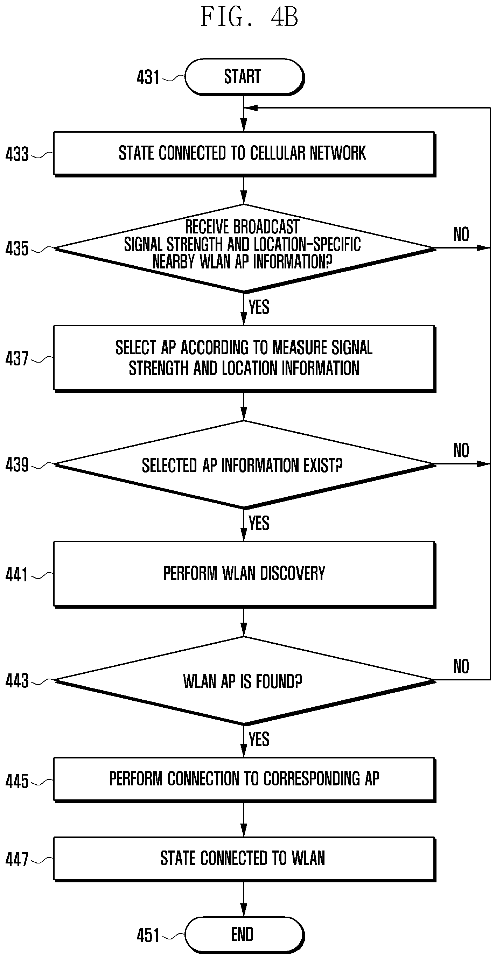

FIGS. 4A and 4B are flowcharts illustrating UE procedures according to an embodiment of the present disclosure. In detail, FIG. 4A illustrates the UE procedure of collecting nearby WLAN AP information, and FIG. 4B illustrates the UE procedure of scanning for nearby WLAN APs based on the collected WLAN AP information.

Referring to FIG. 4A, processing starts at operation 401 and the UE is connected to the cellular network so as to be in the state capable of performing data communication through the cellular network at operation 403.

If a nearby WLAN AP scan request message is received from the eNB and/or if it is determined autonomously to perform nearby WLAN AP scan at operation 405, the UE may perform the nearby WLAN AP scan at operation 407. Otherwise at operation 405, if no nearby WLAN AP scan request message is received and if it is not determined autonomously to perform nearby WLAN AP scan, the UE stays in the state of operation 403.

At operation 409, the UE reports the nearby WLAN AP information collected through scanning at operation 407 to the eNB. At this time, the UE may report at least one of its current location-related information and signal strength of the discovered nearby WLAN AP along with the WLAN AP information. According to an embodiment, the collected WLAN AP information may be reported using an RRC message for use in the 3GPP network. Examples of the location-related information may include the following informations.
- Received signal strength from current serving eNB
   One eNB may have a plurality of antennas, and the antennas may transmit different CSI-RSs. Accordingly, if the UE measures and reports signal strengths of respective CSI-RSs, the eNB is capable of determining the antenna nearby the current UE so as to locate the UE.
   A strength of another signal received from one eNB.
- Signal strengths from current serving eNB and neighbor eNBs (RF fingerprint)
   If the UE reports signal strengths from a plurality of eNBs, the eNB is capable of determining the eNB nearby the UE so as to locate the UE.
- Location information of current UE (UE is capable of acquiring location information as follows)
   Current location is acquired based on GNSS signal
   Current location is acquired based on the location signal transmitted by 3GPP eNB
   Acquired using OTDOA method
   Acquired using E-CID method
- Signal strength received from WLAN AP discovered by the UE and location information based thereon
   The location-related informations may be transmitted along with and/or independently of the collected WLAN AP information.

The processing ends at operation 411.

Referring to FIG. 4B, at operation 431, processing starts and the UE is in the state connected to the cellular network so as to communicate data through the cellular network at operation 433.

If the location information including the strength of the signal transmitted (broadcast) from the eNB and location-specific nearby WLAN AP information are received at operation 435, the UE selects the nearby WLAN AP information among the signal strengths measured by the UE and the WLAN AP informations transmitted (broadcast) according to the current location information of the UE at operation 437. According to an embodiment, the eNB may transmit the location information including the received signal strength of the serving and/or neighbor eNB and the WLAN AP list corresponding to the location information at operation 435. If the above information is received, the UE measures the signal of the serving and/or neighbor eNB at operation 437 and/or determines the location of the UE using a location detection device embodied in the UE and selects the information on the WLAN AP connectable based on the information received from the eNB at operation 437.

If the UE does not receive the nearby WLAN AP information at operation 435, the UE stays in the state of operation 433.

At operation 439, the UE determines whether any selected WLAN AP information is present at operation 439.

If any nearby WLAN AP information is present among the broadcast WLAN AP information, the UE performs scanning for the nearby WLAN APs at operation 441.

If any nearby WLAN AP information is absent, the UE may not perform scanning for WLAN AP. According to an embodiment, the UE skips performing nearby WLAN AP scanning even though its WLAN module is turned on, thereby reducing power consumption of the terminal. Afterward, the UE performs operation 433.

At operation 443, the UE determines whether any nearby WLAN AP is detected through operations 439 and 441. If any nearby WLAN AP is found through the WLAN AP scanning, the UE performs a connection procedure to the found WLAN AP at operation 445. The UE connects to the WLAN through the WLAN AP to communicate data with the WLAN AP at operation 447.

If no WLAN AP is found as the result of the scanning at operation 443, the UE perform operation 433. The processing ends at operation 451.

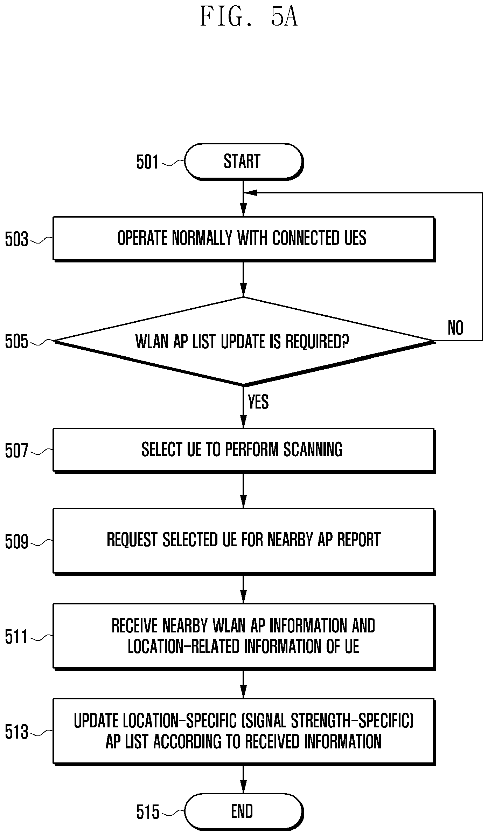

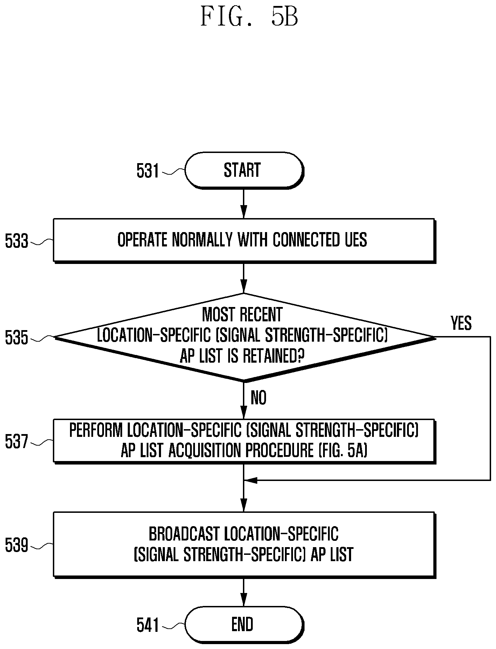

FIGS. 5A and 5B are flowcharts illustrating eNB procedures according to an embodiment of the present disclosure. In more detail, FIG. 5A illustrates an eNB procedure of collecting nearby WLAN AP information, and FIG. 5B illustrates the eNB procedure of transmitting nearby WLAN AP information based on the collected WLAN AP information.

Referring to FIG. 5A, processing begins at operation 501 and at least one UE is connected to the eNB which is in the state capable of communicating with the at least one UE at operation 503.

The eNB determines whether there is any list of WLAN APs present within the cell and, if so, it is necessary update any WLAN AP list at operation 505.

If it is not necessary to update, the eNB returns the procedure to operation 503.

If it is necessary to generate a list of the WLAN APs present within the cell and/or update the list, the eNB selects a UE to perform WLAN AP scanning at operation 507. The UE may be selected according to an operator's preset configuration and/or a user configuration stored in the UE and/or based on the UE having the WLAN access device running currently.

At operation 509, the eNB requests the UE selected at operation 507 to scan for WLAN APs and report scanning result.

The eNB receives the nearby WLAN AP information collected by the UE at operation 511. At this time, the eNB may receive current location-related information of the UE along with the WLAN AP information from the UE. The collected WLAN AP information may be reported using an RRC layer message, and the location-related information may include the following informations.
- Received signal strength from current serving eNB
   One eNB may have a plurality of antennas, and the antennas may transmit different CSI-RSs. Accordingly, if the UE measures and reports signal strengths of respective CSI-RSs, the eNB is capable of determining the antenna nearby the current UE so as to locate the UE.
   Signal strength measured by WLAN AP in proximity to the UE
- Signal strengths from current serving eNB and neighbor eNBs (RF fingerprint)
   If the UE reports signal strengths from a plurality of eNBs, the eNB is capable of determining the eNB nearby the UE so as to locate the UE.
   Location information of current UE (UE is capable of acquiring location information as follows)
- Location information of current UE (UE is capable of acquiring location information as follows)
   Current location is acquired based on GNSS signal
   Current location is acquired based on the location signal transmitted by 3GPP eNB
   Acquired using OTDOA method
   Acquired using E-CID method
- Received signal strength of the WLAN AP which the UE has measured
   The eNB may receive the location-related informations along with the collected WLAN AP information and/or through a separate RRC message and/or dedicated channel.

The eNB may update and manage the location-specific and/or signal strength-specific WLAN AP list according to the received information at operation 513.

Referring to FIG. 5B, processing starts at operation 531 and at least one UE is connected to the eNB which is in the state capable of communicating data with the at least one UE at operation 533.

The eNB determines whether it has a location-specific and/or signal strength-specific WLAN AP list at operation 535. In an embodiment, the WLAN AP list may be stored in the eNB through the operation of FIG. 5A.

If it is determined that the eNB has the location-specific and/or signal strength-specific WLAN AP list, the eNB transmits the information including the location-specific and/or signal strength-specific WLAN AP list to the UEs within the cell at operation 539. The eNB may transmit the above information to the UE through a predetermined SIB message broadcast.

If the WLAN AP list stored in the eNB is obsolete and/or there is no WLAN AP list, the eNB collects the location-specific WLAN AP list within the cell based on the operations described with reference to FIG. 5A at operation 537. Afterward, the eNB performs operation 539. The processing ends at operation 541.

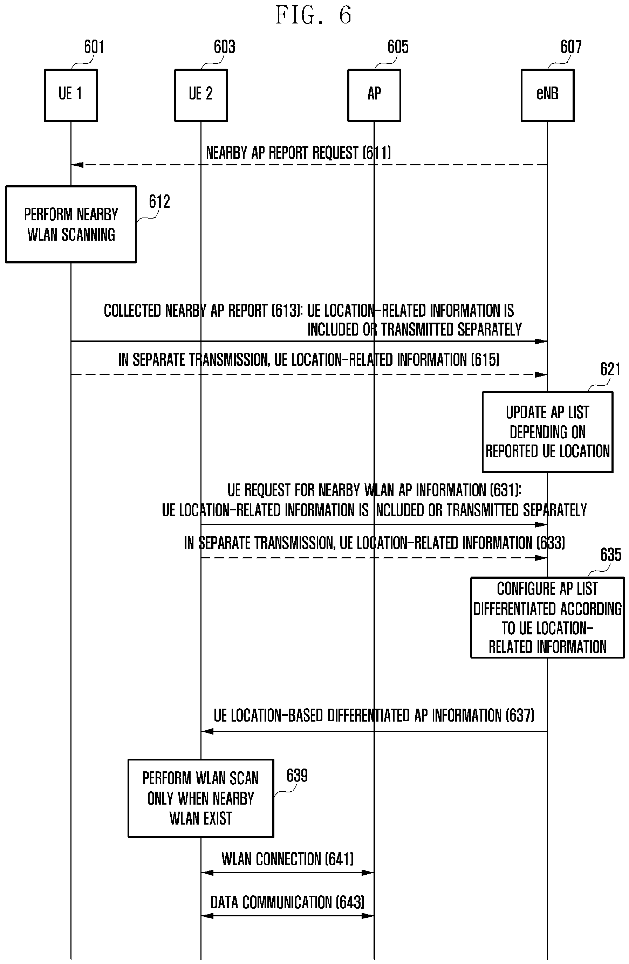

FIG. 6 is a message flow diagram illustrating message follows between an UE and an eNB according to an embodiment of the present disclosure.

Referring to FIG. 6, the UEs 601 and 603 communicate data with the eNB 607, and the WLAN AP 605 is located in the range capable of communicating with the UEs 601 and 603.

According to this embodiment, the eNB 607 requests the UE 601 to scan for WLAN APs and reports the scanning result at operation 611. The above request may be transmitted optionally depending on the embodiment, and the UE may perform the WLAN AP scanning and report the scanning result autonomously without any request.

At operation 612, the UE 601 which has received the request at operation 611 performs WLAN scanning to discover the WLAN APs operating in proximity to the UE 601 and collects the information on the found WLAN APs. The WLAN AP-related information may include at least one of WLAN AP ID (SSID, BSSID), WLAN AP location, and WLAN AP signal strength.

In an embodiment, the UE 601 may perform WLAN scanning without receipt of the request from the eNB 607. The WLAN scanning may be performed in response to the user input and/or according to the configuration, and the UE 601 may store at least one of WLAN AP list, location information, and signal strength of the WLAN APs to which the UE 601 has connected previously. According to an embodiment, if there is any request from the eNB 607, the UE 601 may report at least one of the above informations to the eNB 607.

The UE 601 reports the collected nearby WLAN AP information at operation 613. According to an embodiment, the WLAN AP information may include the information on the WLAN AP 307. The UE 601 may report the current location-related information along with the WLAN AP information.

In an embodiment, the UE 601 may use an RRC layer message of the 3GPP network for reporting the collected WLAN AP information. Examples of the location-related information may include the following informations.
- Received signal strength from current serving eNB
   One eNB may have a plurality of antennas, and the antennas may transmit different CSI-RSs. Accordingly, if the UE measures and reports signal strengths of respective CSI-RSs, the eNB is capable of determining the antenna nearby the current UE so as to locate the UE.
   Strength of another signal received from one eNB.
- Signal strengths from current serving eNB and neighbor eNBs (RF fingerprint)
   If the UE reports signal strengths from a plurality of eNBs, the eNB is capable of determining the eNB nearby the UE so as to locate the UE.
- Location information of current UE (UE is capable of acquiring location information as follows)
   Current location is acquired based on GNSS signal
   Current location is acquired based on the location signal transmitted by 3GPP eNB
   Acquired using OTDOA method
   Acquired using E-CID method
- Signal strength received from at least one WLAN AP discovered by UE.

Or, the above location-related informations may be transmitted to the eNB 607 along with and/or independently of the message reporting the list of the nearby WLAN APs at operation 615.

If at least one of the messages transmitted at 613 and 615 is received, the eNB 607 is capable of generating and/or updating the WLAN AP list different depending on the location of the UE within the cell coverage of the eNB 607 based on the current UE location-related information and WLAN AP information reported by the UE 601. In more detail, the eNB 607 calculates the location of the UE 601 based on the signal strength of the cellular network which the UE 601 has measured and reported and sorts the locations informations into intra-cell WLAN AP list and nearby WLAN AP list.

The eNB 607 may receive the message requesting for the information on the WLAN AP nearby the eNB 603 within the cell at operation 631. According to an embodiment, the message may be carried by an RRC layer message, and the request message may include location-related information (i.e. above described signal strength and/or location information) of the UE 603.

According to an embodiment, the eNB 607 may receive the UE location-related information independently of the message requesting for the information on whether the WLAN AP is present at operation 633. If the location-related information is transmitted as shown at operation 633, the corresponding location-related information may be transmitted in the RRC layer message and/or through dedicated physical channel.

If at least one of the messages of operations 631 and 633 is received, the eNB 607 selects, at operation 635, the WLAN AP list differentiated according to the current location of the UE 603 among WLAN AP informations collected and updated at operation 621.

The eNB 607 transmits the selected WLAN AP list information to the UE 603 at operation 637. According to an embodiment, the WLAN AP list information may be transmitted in a unicast message. Also, the response message may be transmitted in the RRC layer message.

The UE 603 performs nearby WLAN AP scanning according to the information in the received response message at operation 639. If the received response message includes no nearby AP information, the UE 603 skips WLAN AP scanning even through its WLAN module is turned on, thereby reducing power consumption of the UE 603.

If it is determined that there is any connectable WLAN AP 605, the UE 603 performs authentication and association procedure to the corresponding WLAN AP 605 at operation 641 and, if the procedure is successful, performs data communication with the corresponding WLAN AP 605 at operation 643.

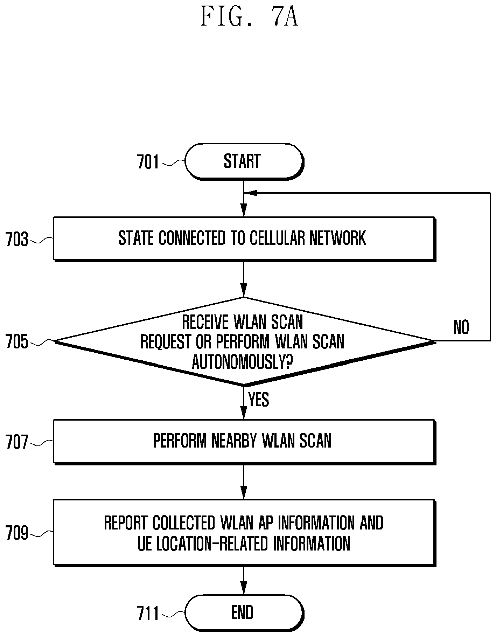

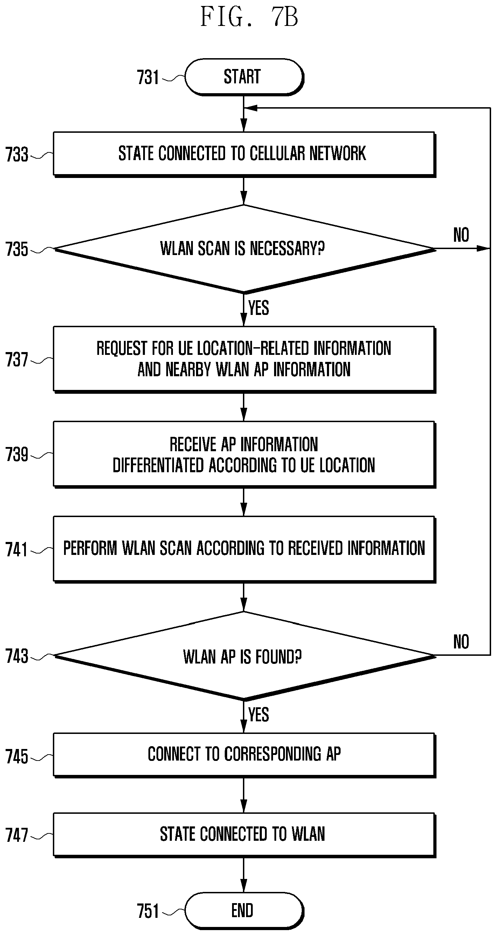

FIGS. 7A and 7B are flowcharts illustrating an UE procedure according to an embodiment of the present disclosure. In more detail, FIG. 7A illustrates the UE procedure of collecting nearby WLAN AP information, and FIG. 7B illustrates the UE procedure of scanning nearby WLAN APs based on the collected WLAN AP information.

Referring to FIG. 7A, processing starts at operation 701 and the UE is connected to the cellular network so as to be in the state capable of performing data communication through the cellular network at operation 703.

If a nearby WLAN AP scan request message is received from the eNB and/or if it is determined autonomously to perform nearby WLAN AP scan at operation 705, the UE may perform the nearby WLAN AP scanning at operation 707. Otherwise if no nearby WLAN AP scan request message is received and if it is not determined autonomously to perform nearby WLAN AP scan, the UE stays in the state of operation 703.

At operation 709, the UE reports the nearby WLAN AP information collected through scanning at operation 707 to the eNB. At this time, the UE may report at least one of its current location-related information and signal strength of the discovered nearby WLAN AP along with the WLAN AP information. According to an embodiment, the collected WLAN AP information may be reported using an RRC message for use in the 3GPP network. Examples of the location-related information may include the following informations.
- Received signal strength from current serving eNB
   One eNB may have a plurality of antennas, and the antennas may transmit different CSI-RSs. Accordingly, if the UE measures and reports signal strengths of respective CSI-RSs, the eNB is capable of determining the antenna nearby the current UE so as to locate the UE.
   Strength of another signal received from one eNB.
- Signal strengths from current serving eNB and neighbor eNBs (RF fingerprint)
   If the UE reports signal strengths from a plurality of eNBs, the eNB is capable of determining the eNB nearby the UE so as to locate the UE.
- Location information of current UE (UE is capable of acquiring location information as follows)
   Current location is acquired based on GNSS signal
   Current location is acquired based on the location signal transmitted by 3GPP eNB
   Acquired using OTDOA method
   Acquired using E-CID method
- Signal strength received from WLAN AP discovered by the UE and location information based thereon
   The location-related informations may be transmitted along with and/or independently of the collected WLAN AP information.

The processing ends at operation 711.

Referring to FIG. 7B, the UE is in the state connected to a cellular network so as to communication data through the cellular network at operation 733.

The UE determines whether nearby WLAN scanning is necessary for WLAN connection at operation 735.

If it is determined that the nearby WLAN scanning is necessary, the UE transmits at least one of the message including its current location-related information and the message requesting for nearby WLAN AP information to the eNB at operation 737. The UE location-related information may include the following informations.
- Received signal strength from current serving eNB
   One eNB may have a plurality of antennas, and the antennas may transmit different CSI-RSs. Accordingly, if the UE measures and reports signal strengths of respective CSI-RSs, the eNB is capable of determining the antenna nearby the current UE so as to locate the UE.
   Strengths of different signals received from one eNB
- Signal strengths from current serving eNB and neighbor eNBs (RF fingerprint)
   If the UE reports signal strengths from a plurality of eNBs, the eNB is capable of determining the eNB nearby the UE so as to locate the UE.
   Location information of current UE (UE is capable of acquiring location information as follows)
- Location information of current UE (UE is capable of acquiring location information as follows)
   Current location is acquired based on GNSS signal
   Current location is acquired based on the location signal transmitted by 3GPP eNB
   Acquired using OTDOA method
   Acquired using E-CID method
   According to an embodiment, the above location-related informations may be transmitted along with and/or independently of the nearby WLAN AP information request message.

It the WLAN AP scanning is not necessary at operation 735, the UE performs operation 733.

The UE receives a response message from the eNB in reply to the request message at operation 739. In an embodiment, the response message may include a list of the WLAN APs that are may present in proximity to the UE according to the UE location-related information. According to an embodiment, the WLAN AP list may be the list of the WLAN APs in the range where the UE is connectable thereto.

After receiving the response message, the UE scans for WLAN APs according to the information in the received response message at operation 741.

According to an embodiment, if no nearby AP information is included in the received response message, the UE skips scanning for WLAN APs even though its WLAN module is turned on, thereby reducing the power consumption of the UE.

At operation 743, the UE determines whether any connectable WLAN AP has been discovered in the WLAN scanning at the operation 741. If any connectable WLAN AP has been discovered, the UE performs a connection procedure to the connectable WLAN AP at operation 745. The UE connects to the WLAN via the WLAN AP to communicate data with the WLAN AP at operation 747.

If no connectable WLAN AP has been discovered at operation 743, the UE returns the procedure to operation 733.

### The processing ends at operation 751

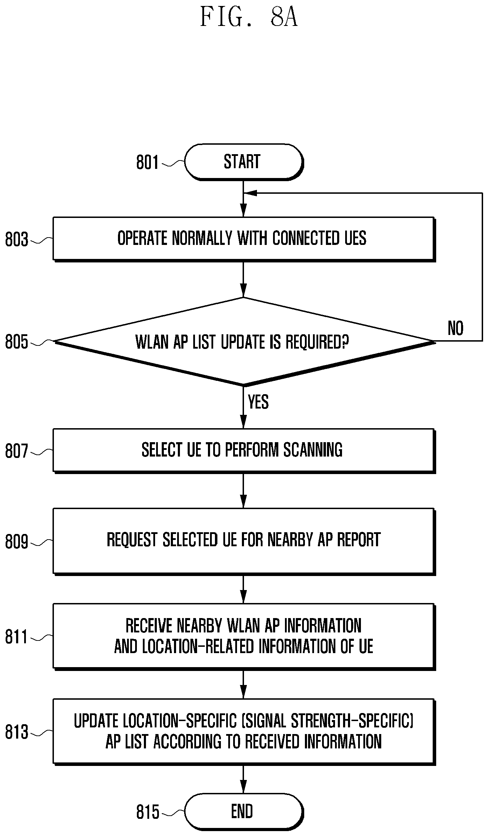

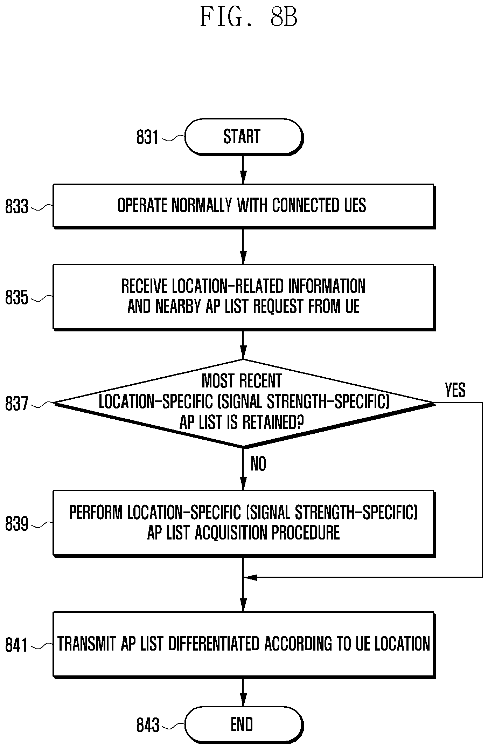

FIGS. 8A and 8B are flowcharts illustrating the eNB procedures according to an embodiment of the present disclosure. In more detail, FIG. 8A illustrates the eNB procedure of collecting nearby WLAN AP information, and FIG. 5B illustrates the eNB procedure of transmitting the nearby WLAN AP information based on the collected WLAN AP information.

Referring to FIG. 8A, processing begins at operation 801 and at least one UE is connected to the eNB which is in the state capable of communicating with the at least one UE at operation 803.

The eNB determines whether there is any list of WLAN APs present within the cell and, if so, it is necessary update any WLAN AP list at operation 805.

If it is not necessary to update, the eNB returns the procedure to operation 803.

If it is necessary to generate a list of the WLAN APs present within the cell and/or update the list, the eNB selects a UE to perform WLAN AP scanning at operation 807. The UE may be selected according to an operator's preset configuration and/or user configuration stored in the UE and/or based on the UE having the WLAN access device running currently.

At operation 809, the eNB requests the UE selected at operation 807 to scan for WLAN APs and report scanning result.

The eNB receives the nearby WLAN AP information collected by the UE at operation 811. At this time, the eNB may receive current location-related information of the UE along with the WLAN AP information from the UE. The collected WLAN AP information may be reported using an RRC layer message, and the location-related information may include the following informations.
- Received signal strength from current serving eNB
   One eNB may have a plurality of antennas, and the antennas may transmit different CSI-RSs. Accordingly, if the UE measures and reports signal strengths of respective CSI-RSs, the eNB is capable of determining the antenna nearby the current UE so as to locate the UE.
   Signal strength measured by WLAN AP in proximity to the UE
- Signal strengths from current serving eNB and neighbor eNBs (RF fingerprint)
   If the UE reports signal strengths from a plurality of eNBs, the eNB is capable of determining the eNB nearby the UE so as to locate the UE.
   Location information of current UE (UE is capable of acquiring location information as follows)
- Location information of current UE (UE is capable of acquiring location information as follows)
   Current location is acquired based on GNSS signal
   Current location is acquired based on the location signal transmitted by 3GPP eNB
   Acquired using OTDOA method
   Acquired using E-CID method
- Received signal strength of the WLAN AP which the UE has measured
   The eNB may receive the location-related informations along with the collected WLAN AP information and/or through a separate RRC message and/or dedicated channel.

The eNB may update and manage the location-specific and/or signal strength-specific WLAN AP list according to the received information at operation 813. The processing ends at operation 815.

Referring to FIG. 8B, processing starts at operation 831 and at least one UE is connected to the eNB which is in the state capable of communicating data with at least one UE at operation 833.

The eNB receives the nearby WLAN AP list request message along with the current UE location-related information from the UE at operation 835. The location-related information may include at least one of cellular network signal strength and WLAN AP signal strength measured by the UE.

The eNB determines whether it has the location-specific and/or signal strength-specific WLAN AP list of the WLANs within the cell coverage of the eNB at operation 837.

If the eNB has the most recent location-specific and/or signal strength-specific WLAN AP list, the eNB selects, at operation 841, the list of the WLAN APs in proximity to the UE among the WLAN APs determined by the eNB based on the UE location-related information received at operation 835 and transmits the nearby WLAN AP list to the UE. According to an embodiment, the WLAN APs included in the selected WLAN AP list may be the WLAN APs nearby the UE.

If the WLAN AP list stored in the eNB is obsolete and/or there is no WLAN AP list, the eNB performs the operations described with reference to FIG. 8A to collect the location-specific WLAN AP list information within the cell at operation 839. Afterward, the eNB selects the list of the WLAN APs present in proximity to the UE based on the information collected at operation 841 and the UE location-related information received at operation 835 and transmits the nearby WLAN AP information to the UE. According to an embodiment, the nearby WLAN AP information may be transmitted from the eNB to the UE through an RRC layer message and/or any of other types of messages depending on the embodiment. The processing ends at operation 843.

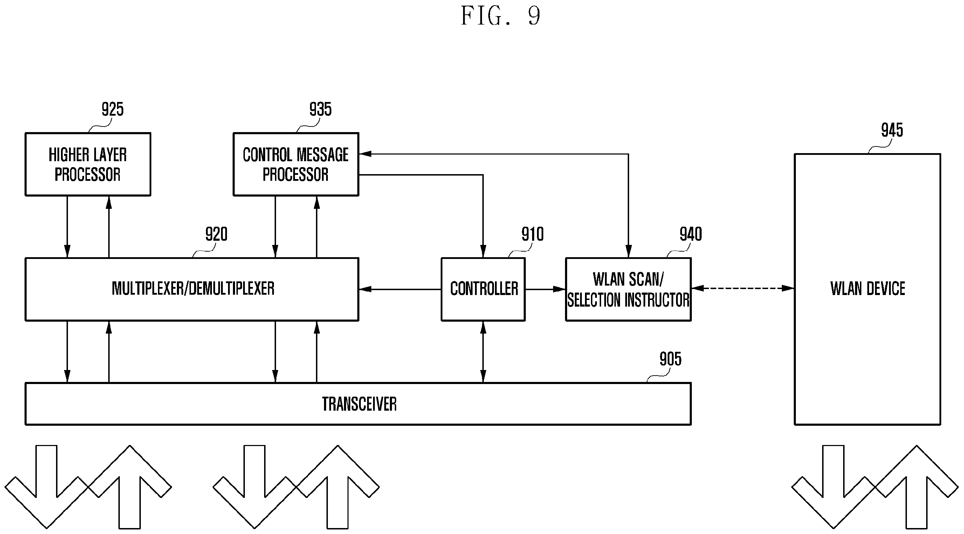

FIG. 9 is a block diagram illustrating a configuration of an UE according to an embodiment of the present disclosure.

Referring to FIG. 9, the UE according to an embodiment of the present disclosure includes a transceiver 905, a controller 910, a multiplexer/demultiplexer 920, a control message processor 935, and a higher layer processor 925.

The transceiver 905 receives data and control signals through downlink channel of the serving cell and transmits data and control signals through uplink channel. In the case that a plurality of serving cells is configured, the transceiver 905 performs data and controls signal transmissions through the plural serving cells.

The multiplexer/demultiplexer 920 may multiplex the data generated by the higher layer processor 925 and the control message processor 935 and demultiplex the data received by the transceiver 905 and may transfer the demultiplexed data to the higher layer processor 925 and the control message processor 935.

The control message processor 935 may process the control message received from the eNB and takes a necessary action. For example, if DRX parameters are received, the control message processor 930 may transfer the parameters to the controller 910.

The higher layer processor 925 may be implemented per service. Higher layer processor processes the data generated by user service such as File Transfer Protocol (FTP) and Voice over Internet Protocol (VoIP) and transfers the processing result to the multiplexer/demultiplexer 920 and processes the data from the multiplexer/demultiplexer 920 and transfers the processed data to the higher layer service application.

The controller 910 controls the transceiver 905 and the multiplexer/demultiplexer 920 to perform uplink transmission using appropriate transmission resource at an appropriate time. The controller 910 also controls the transceiver 905 in association with DRX operation and CSI/SRS transmission.

In the present disclosure, it is assumed that a WLAN device 945 is embodied in the UE, and the WLAN scan/selection instructor 940 proposed in the present disclosure notifies the WLAN whether to scan and select WLAN based on the information received from the cellular network such that the WLAN device 945 to perform scanning in time.

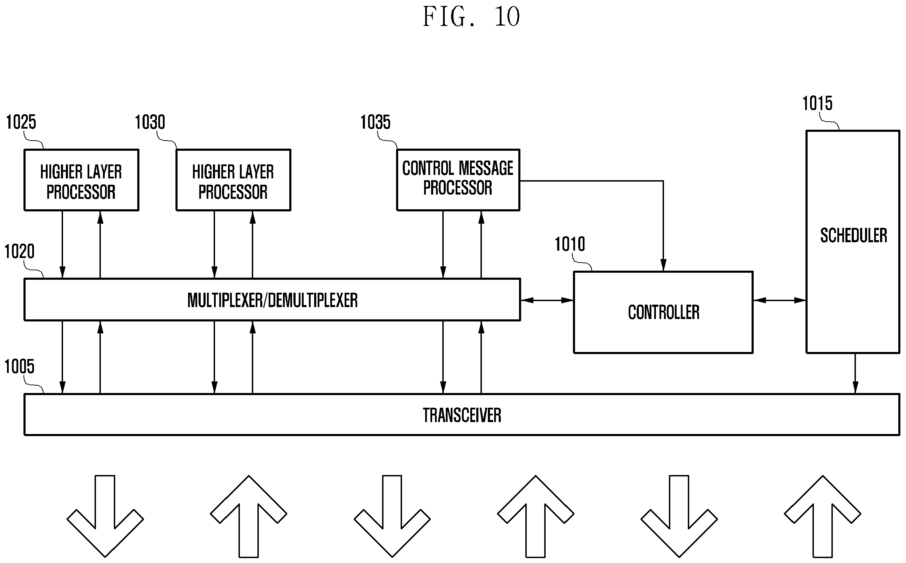

FIG. 10 is a block diagram illustrating a configuration of an eNB according to an embodiment of the present disclosure.

The eNB of FIG. 10 includes a transceiver 1005, a controller 1010, a multiplexer/demultiplexer 1020, a control message processor 1035, various higher layer processors 1025 and 1030, and a scheduler 1015.

The transceiver 1005 may transmit data and controls signals through downlink carriers and receives data and control signals through uplink carriers. In the case that a plurality of carriers is configured, the transceiver 1005 performs data and control signal communication through the plural carriers.

The multiplexer/demultiplexer 1020 is responsible for multiplexing data generated by the higher layer processor 1025 and 1030 and the control message processor 1035 and demultiplexes the data received by the transceiver 1005 and delivers the demultiplexed data to the higher layer processor 1025 and 1030, the control message processor 1035, and the controller 1010. The control message processor 1035 may process the control message transmitted by the UE to take a necessary action and generates the control message to be transmitted to the UE to the higher layer.

The higher layer processors 1025 and 1030 may be implemented per UE per service, processes the data generated by user service such as FTP and VoIP and transfers the processing result to the multiplexer/demultiplexer 1020 and processes the data from the multiplexer/demultiplexer 1020 and transfers the processed data to the higher layer service application.

The controller 1010 may determine the time for transmitting CSI/SRS and controls the transceiver 1005.

The scheduler 1015 may allocate transmission resource to the UE at an appropriate time in consideration of buffer state and channel condition of the UE and controls the transceiver 1005 to process the signal transmitted by the UE and/or to be transmitted to the UE.

The location-specific WLAN information provision method of the present disclosure is capable of allowing the cellular communication network to provide the UE with the WLAN information in a location-specific manner according to the location of the UE, thereby reducing information transmission overhead and preventing the UE from scanning for WLAN APs that are absent in proximity to the UE, resulting in power consumption.

Throughout the specification, the eNB may store the information on the WLAN APs within its coverage and the location information list of the WLAN APs. The WLAN AP location information is acquired based on the signal received from the UEs within the coverage of the UE. In more detail, the UE measures the received signal strength from the serving and/or neighbor eNBs, and the UE and eNB may determine the location of the UE based on the measured received signal strength. The UE may scan for the connectable WLAN APs in proximity to the location where the UE measures the signal strength. The UE may determine the frequency band on which the connectable WLAN AP is operating, measure the signal strength from the WLAN AP, and transmit the measurement result to the eNB. The eNB may be aware of the WLAN AP located within the cell coverage and determined the location of the WLAN AP. The location information may be determined based on the signal strength from at least one eNB which at least one UE has measured.

The eNB may transmit the WLAN AP information and location information on the WLAN AP to the UE. The location information may be transmitted in such a way of broadcasting the WLAN AP list and location-related information within the cell coverage of the eNB and/or unicasting, when a WLAN AP information request is received from a specific UE, the information on the WLAN APs in proximity to the specific UE.

Once the WLAN AP information and location information on the WLAN AP have been received, the UE may attempt connection to the WLAN APs in proximity to the UE selectively. Since the UE does not perform scanning for the WLAN APs absent in the received WLAN AP list, resulting in reduction of power consumption.

As described above, the WLAN information provision method and apparatus of the present disclosure is capable of allowing the cellular communication network to provide the terminal with location-specific WLAN information, thereby reducing control information overhead and avoiding unnecessary scanning of WLAN that are absent in proximity to the terminal, resulting in reduction of power consumption.

Although the description has been made with reference to particular embodiments, the present disclosure may be implemented with various modifications without departing from the scope of the claims. Thus, the present disclosure is not limited to the particular embodiments disclosed.

While the present disclosure has been shown and described with reference to various embodiments thereof, it will be understood by those skilled in the art that various changes in form and details may be made therein without departing from the scope of the present disclosure as defined by the appended claims.

## Claims

1. A data communication method of a terminal of a mobile communication system, the method comprising:
identifying, by the terminal, whether a nearby wireless local area network, WLAN, access point, AP, scan request message is received from a base station;
scanning, by the terminal, for the WLAN APs in proximity to the terminal to determine the WLAN AP information in proximity to the terminal;
transmitting, by the terminal, a first message to the base station, the first message including information related to a location of the terminal wherein the first message includes WLAN AP information in proximity to the terminal, if the request is received from the base station;
receiving, by the terminal, a second message including a first wireless local area network, WLAN, access point, AP, list, the first WLAN AP list including information on at least one WLAN AP corresponding to the information related to the location of the terminal, wherein the receiving of the second message comprises receiving a message including the WLAN AP list of the WLAN APs within a cell of the base station and a received signal strength of a signal transmitted by the base station which is measured by at least one terminal located within the cell, the second message being a broadcast message; and
searching, by the terminal, for WLAN AP based on the first WLAN AP list and the information related to the location of the terminal.

2. The method of claim 1, wherein the first message comprises at least one of a received signal strength of a signal received from the scanned WLAN AP, a bandwidth used by the WLAN AP, a received signal strength of a signal received from the base station, and received signal strengths of signals received from neighbor base stations.

3. A data communication method of a base station of a mobile communication system, the method comprising:
transmitting, by the base station, a nearby wireless local area network, WLAN, access point, AP, scan request message to a terminal;
receiving, by the base station, a first message from the terminal, the first message including information related to a location of a terminal, wherein the first message includes WLAN AP information in proximity to the terminal to update a second WLAN AP list at the base station if the request is transmitted to the terminal; and
transmitting, by the base station, a second message including a first wireless local area network, WLAN, access point, AP, list, the first WLAN AP list including information on at least one WLAN AP corresponding to the information related to the location of the terminal, wherein the information on at least one WLAN AP included in the first WLAN AP list is selected from the second WLAN AP list based on the information related to the location of the terminal,
wherein the second message triggers the terminal to search for WLAN AP based on the first WLAN AP list and the information related to the location of the terminal, and
wherein the transmitting of the second message comprises broadcasting a message including the WLAN AP list of the WLAN APs within a cell of the base station and a received signal strength of a signal transmitted by the base station which is measured by at least one terminal located within the cell.

4. The method of claim 3, wherein the first message comprises at least one of a received signal strength of a signal received from the scanned WLAN AP, a bandwidth used by the WLAN AP, a received signal strength of a signal received from the base station, and received signal strengths of signals received from neighbor base stations.

5. A terminal of a mobile communication system, the terminal comprising:
a transceiver configured to transmit a first message including information related to a location of the terminal to a base station and receive a second message including a first wireless local area network, WLAN, access point, AP, list, the first WLAN AP list including information on at least one WLAN AP corresponding to the information related to the location of the terminal; and
a controller configured to identify whether a nearby wireless local area network, WLAN, access point, AP, scan request message is received from a base station, and to control the transceiver to scan for the WLAN APs in proximity to the terminal to determine the WLAN AP information in proximity to the terminal,
wherein the first message includes WLAN AP information in proximity to the terminal to update a second WLAN AP list at the base station, if the request is received from the base station, and
wherein the information on at least one WLAN AP included in the first WLAN AP list is selected from the second WLAN AP list based on the information related to the location of the terminal, wherein the transceiver is configured to receive a message including the WLAN AP list of the WLAN APs within a cell of the base station and a received signal strength of a signal transmitted by the base station which is measured by at least one terminal located within the cell, the message being a broadcast message.

6. The terminal of claim 5, wherein the first message comprises at least one of a received signal strength of a signal received from the scanned WLAN AP, a bandwidth used by the WLAN AP, a received signal strength of a signal received from the base station, and received signal strengths of signals received from neighbor base stations.

7. A base station of a mobile communication system, the base station comprising:
a transceiver configured to transmit a nearby wireless local area network, WLAN, access point, AP, scan request message to a terminal, and to receive a first message including information related to a location of a terminal from the terminal; and
a controller configured to control the transceiver to transmit a second message including a first wireless local area network, WLAN, access point, AP, list, the first WLAN AP list including information on at least one WLAN AP corresponding to the information related to the location of the terminal, wherein the transmitting of the second message comprises broadcasting a message including the WLAN AP list of the WLAN APs within a cell of the base station and a received signal strength of a signal transmitted by the base station which is measured by at least one terminal located within the cell;
wherein the second message is configured to trigger the terminal to search for WLAN AP based on the first WLAN AP list and the information related to the location of the terminal,
wherein the first message includes WLAN AP information in proximity to the terminal to update a second WLAN AP list at the base station if the request is transmitted to the terminal, and
wherein the information on at least one WLAN AP included in the first WLAN AP list is selected from the second WLAN AP list based on the information related to the location of the terminal.

8. The base station of claim 7, wherein the first message comprises at least one of a received signal strength of a signal received from the scanned WLAN AP, a bandwidth used by the WLAN AP, a received signal strength of a signal received from the base station, and received signal strengths of signals received from neighbor base stations.

## Patentansprüche

1. Datenkommunikationsverfahren eines Endgeräts eines mobilen Kommunikationssystems, wobei das Verfahren Folgendes umfasst:
Identifizieren, von dem Endgerät, ob eine Abtastanforderungsnachricht eines nahegelegenen Wireless Local Area Network, WLAN, -Zugangspunktes, AP, von einer Basisstation empfangen wird;
Abtasten, von dem Endgerät, nach den WLAN-APs in der Nähe des Endgeräts, um die WLAN-AP-Informationen in der Nähe des Endgeräts zu bestimmen;
Übertragen, von dem Endgerät, einer ersten Nachricht an die Basisstation, wobei die erste Nachricht Informationen aufweist, die sich auf einen Standort des Endgeräts beziehen, wobei die erste Nachricht WLAN-AP-Informationen in der Nähe des Endgeräts aufweist, falls die Anforderung von der Basisstation empfangen wird;
Empfangen, von dem Endgerät, einer zweiten Nachricht, die eine erste Liste des Wireless Local Area Network, WLAN, -Zugangspunktes, AP aufweist, wobei die erste WLAN-AP-Liste Folgendes aufweist Informationen über mindestens einen WLAN-AP, der den Informationen entspricht, die sich auf den Standort des Endgeräts beziehen, wobei das Empfangen der zweiten Nachricht das Empfangen einer Nachricht umfasst, welche die WLAN-AP-Liste der WLAN-APs innerhalb einer Zelle der Basisstation und eine empfangene Signalstärke eines Signals beinhaltet, das von der Basisstation übertragen wird und das von mindestens einem Endgerät gemessen wird, das sich in der Zelle befindet, wobei die zweite Nachricht eine Broadcast-Nachricht ist; und Suchen, von dem Endgerät, nach dem WLAN-AP basierend auf der ersten WLAN-AP-Liste und den Informationen, die sich auf den Standort des Endgeräts beziehen.

2. Verfahren nach Anspruch 1, wobei die erste Nachricht mindestens eine empfangene Signalstärke eines Signals, das von dem abgetasteten WLAN-AP empfangen wird, eine Bandbreite, die von dem WLAN-AP verwendet wird, eine empfangene Signalstärke eines Signals, das von der Basisstation empfangen wird, und empfangene Signalstärken von Signalen umfasst, die von benachbarten Basisstationen empfangen werden.

3. Datenkommunikationsverfahren einer Basisstation eines mobilen Kommunikationssystems, wobei das Verfahren Folgendes umfasst:
Übertragen, von der Basisstation, einer Abtastanforderungsnachricht eines nahegelegenen Wireless Local Area Network, WLAN, -Zugangspunktes, AP;
Empfangen, von der Basisstation, einer ersten Nachricht von dem Endgerät, wobei die erste Nachricht Informationen aufweist, die sich auf einen Standort eines Endgeräts beziehen, wobei die erste Nachricht WLAN-AP-Informationen in der Nähe des Endgeräts aufweist, um eine zweite WLAN-AP-Liste an der Basisstation zu aktualisieren, falls die Anforderung an die Basisstation übertragen wird; und
Übertragen, von der Basisstation, einer zweiten Nachricht, die eine erste Liste des Wireless Local Area Network, WLAN, -Zugangspunktes, AP aufweist, wobei die erste WLAN-AP-Liste Folgendes aufweist Informationen über mindestens einen WLAN-AP, der den Informationen über den Standort des Endgeräts entspricht, wobei die Informationen über mindestens einen WLAN-AP, der in der ersten WLAN-AP-Liste enthalten ist, aus der zweiten WLAN-AP-Liste basierend auf den Informationen, die sich auf den Standort des Endgeräts beziehen, ausgewählt sind,
wobei die zweite Nachricht das Endgerät auslöst, nach dem WLAN-AP basierend auf der ersten WLAN-AP-Liste und den Informationen, die sich auf den Standort des Endgeräts beziehen, zu suchen, und
wobei das Übertragen der zweiten Nachricht das Übermitteln einer Nachricht umfasst, welche die WLAN-AP-Liste der WLAN-APs innerhalb einer Zelle der Basisstation und eine empfangene Signalstärke eines Signals beinhaltet, das von der Basisstation übertragen wird und das von mindestens einem Endgerät gemessen wird, das sich in der Zelle befindet.

4. Verfahren nach Anspruch 3, wobei die erste Nachricht mindestens eine empfangene Signalstärke eines Signals umfasst, das von dem abgetasteten WLAN-AP empfangen wird, eine Bandbreite, die von dem WLAN-AP verwendet wird, eine empfangene Signalstärke eines Signals, das von der Basisstation empfangen wird, und empfangene Signalstärken von Signalen umfasst, die von benachbarten Basisstationen empfangen werden.

5. Endgerät eines mobilen Kommunikationssystems, wobei das Endgerät Folgendes umfasst:
einen Transceiver, der konfiguriert ist, eine erste Nachricht, die einen Standort des Endgeräts aufweist, an eine Basisstation zu übertragen und eine zweite Nachricht zu empfangen, die eine erste Liste des Wireless Local Area Network, WLAN, -Zugangspunktes, AP, aufweist, wobei die erste WLAN-AP-Liste Informationen über mindestens einen WLAN-AP aufweist, der den Informationen entspricht, die sich auf den Standort des Endgeräts beziehen; und
eine Steuerung, die konfiguriert ist, zu identifizieren, ob eine Abtastanforderungsnachricht eines nahegelegenen Wireless Local Area Network, WLAN, -Zugangspunktes, AP, von einer Basisstation empfangen wird, und den Transceiver derart zu steuern, dass er in der Nähe des Endgeräts nach den WLAN-APs sucht, um die WLAN-AP-Informationen in der Nähe des Endgeräts zu bestimmen,
wobei die erste Nachricht WLAN-AP-Informationen in der Nähe des Endgeräts aufweist, um eine zweite WLAN-AP-Liste an der Basisstation zu aktualisieren, falls die Anforderung von der Basisstation empfangen wird, und
wobei die Informationen über mindestens einen WLAN-AP, der in der ersten WLAN-AP-Liste enthalten ist, aus der zweiten WLAN-AP-Liste ausgewählt sind, die auf Informationen basiert, die sich auf den Standort des Endgeräts beziehen, wobei der Transceiver konfiguriert ist, eine Nachricht zu empfangen, welche die Liste der WLAN-APs innerhalb einer Zelle der Basisstation und eine empfangene Signalstärke eines Signals beinhaltet, das von der Basisstation übertragen wird und das von mindestens einem Endgerät gemessen wird, das sich in der Zelle befindet, wobei die Nachricht eine Broadcast-Nachricht ist.

6. Endgerät nach Anspruch 5, wobei die erste Nachricht mindestens eine empfangene Signalstärke eines Signals, das von dem abgetasteten WLAN-AP empfangen wird, eine Bandbreite, die von dem WLAN-AP verwendet wird, eine empfangene Signalstärke eines Signals, das von der Basisstation empfangen wird, und empfangene Signalstärken von Signalen umfasst, die von benachbarten Basisstationen empfangen werden.

7. Basisstation eines mobilen Kommunikationssystems, wobei die Basisstation Folgendes umfasst:
einen Transceiver, der konfiguriert ist, eine Abtastanforderungsnachricht eines nahegelegenen Wireless Local Area Network, WLAN, -Zugangspunktes, AP, an ein Endgerät zu übertragen und eine erste Nachricht, die Informationen aufweist, die sich auf einen Standort eines Endgeräts beziehen, von dem Endgerät zu empfangen; und eine Steuerung, die konfiguriert ist, den Transceiver zu steuern, um eine zweite Nachricht zu übertragen, die eine erste Liste des Wireless Local Area Network, WLAN, - Zugangspunktes, AP, aufweist, wobei die erste WLAN-AP-Liste Informationen über mindestens einen WLAN-AP aufweist, der den Informationen entspricht, die sich auf den Standort des Endgeräts beziehen, wobei das Übertragen der zweiten Nachricht das Übermitteln einer Nachricht umfasst, welche die WLAN-AP-Liste der WLAN-APs innerhalb einer Zelle der Basisstation und eine empfangene Signalstärke eines Signals beinhaltet, das von der Basisstation übertragen wird und das von mindestens einem Endgerät gemessen wird, das sich in der Zelle befindet;
wobei die zweite Nachricht konfiguriert ist, das Endgerät auszulösen, nach dem WLAN-AP basierend auf der ersten WLAN-AP-Liste und den Informationen, die sich auf den Standort des Endgeräts beziehen, zu suchen,
wobei die erste Nachricht WLAN-AP-Informationen in der Nähe des Endgeräts aufweist, um eine zweite WLAN-AP-Liste an der Basisstation zu aktualisieren, falls die Anforderung an das Endgerät übertragen wird, und
wobei die Informationen über mindestens einen WLAN-AP, der in der ersten WLAN-AP-Liste enthalten ist, aus der zweiten WLAN-AP-Liste basierend auf den Informationen, die sich auf den Standort des Endgeräts beziehen, ausgewählt sind.

8. Basisstation nach Anspruch 7, wobei die erste Nachricht mindestens eine empfangene Signalstärke eines Signals, das von dem abgetasteten WLAN-AP empfangen wird, eine Bandbreite, die von dem WLAN-AP verwendet wird, eine empfangene Signalstärke eines Signals, das von der Basisstation empfangen wird, und empfangene Signalstärken von Signalen umfasst, die von benachbarten Basisstationen empfangen werden.

## Revendications

1. Procédé de communication de données d'un terminal d'un système de communication mobile, le procédé comprenant :
l'identification, par le terminal, si un message de demande de balayage de point d'accès, AP, de réseau local sans fil, WLAN, proche est reçu en provenance d'une station de base ;
le balayage, par le terminal, des WLAN AP à proximité du terminal pour déterminer les informations de WLAN AP à proximité du terminal ;
la transmission, par le terminal, d'un premier message à destination de la station de base, le premier message comprenant des informations relatives à un emplacement du terminal, dans lequel le premier message comprend des informations de WLAN AP à proximité du terminal, si la demande est reçue en provenance de la station de base ;
la réception, par le terminal, d'un deuxième message comprenant une première liste de points d'accès, AP, de réseau local sans fil, WLAN, la première liste de WLAN AP comprenant des informations sur au moins un WLAN AP correspondant aux informations relatives à l'emplacement du terminal, dans lequel la réception du deuxième message comprend la réception d'un message comprenant la liste de WLAN AP des WLAN AP à l'intérieur d'une cellule de la station de base et une force de signal reçu d'un signal transmis par la station de base qui est mesurée par au moins un terminal situé à l'intérieur de la cellule, le deuxième message étant un message de diffusion ; et
la recherche, par le terminal, de WLAN AP sur la base de la première liste de WLAN AP et des informations relatives à l'emplacement du terminal.

2. Procédé selon la revendication 1, dans lequel le premier message comprend au moins l'une d'une force de signal reçu d'un signal reçu en provenance du WLAN AP balayé, d'une largeur de bande utilisée par le WLAN AP, d'une force de signal reçu d'un signal reçu en provenance de la station de base, et de forces de signal reçu de signaux reçus en provenance de stations de base voisines.

3. Procédé de communication de données d'une station de base d'un système de communication mobile, le procédé comprenant :
la transmission, par la station de base, d'un message de demande de balayage de point d'accès, AP, de réseau local sans fil, WLAN, proche à destination d'un terminal ;
la réception, par la station de base, d'un premier message en provenance du terminal, le premier message comprenant des informations relatives à un emplacement d'un terminal, dans lequel le premier message comprend des informations de WLAN AP à proximité du terminal pour mettre à jour une deuxième liste de WLAN AP à la station de base si la demande est transmise à destination du terminal ; et
la transmission, par la station de base, d'un deuxième message comprenant une première liste de points d'accès, AP, de réseau local sans fil, WLAN, la première liste de WLAN AP comprenant des informations sur au moins un WLAN AP correspondant aux informations relatives à l'emplacement du terminal, dans lequel les informations sur au moins un WLAN AP inclus dans la première liste de WLAN AP sont sélectionnées dans la deuxième liste de WLAN AP sur la base des informations relatives à l'emplacement du terminal,
dans lequel le deuxième message amène le terminal à effectuer une recherche de WLAN AP sur la base de la première liste de WLAN AP et des informations relatives à l'emplacement du terminal, et
dans lequel la transmission du deuxième message comprend la diffusion d'un message comprenant la liste de WLAN AP des WLAN AP à l'intérieur d'une cellule de la station de base et une force de signal reçu d'un signal transmis par la station de base qui est mesurée par au moins un terminal situé à l'intérieur de la cellule.

4. Procédé selon la revendication 3, dans lequel le premier message comprend au moins l'une d'une force de signal reçu d'un signal reçu en provenance du WLAN AP balayé, d'une largeur de bande utilisée par le WLAN AP, d'une force de signal reçu d'un signal reçu en provenance de la station de base, et de forces de signal reçu de signaux reçus en provenance de stations de base voisines.

5. Terminal d'un système de communication mobile, le terminal comprenant :
un émetteur-récepteur configuré pour effectuer la transmission d'un premier message comprenant des informations relatives à un emplacement du terminal à destination d'une station de base et la réception d'un deuxième message comprenant une première liste de points d'accès, AP, de réseau local sans fil, WLAN, la première liste de WLAN AP comprenant des informations sur au moins un WLAN AP correspondant aux informations relatives à l'emplacement du terminal ; et
un organe de commande configuré pour effectuer l'identification si un message de demande de balayage de point d'accès, AP, de réseau local sans fil, WLAN, proche est reçu en provenance d'une station de base, et pour commander à l'émetteur-récepteur d'effectuer le balayage des WLAN AP à proximité du terminal pour déterminer les informations de WLAN AP à proximité du terminal ;
dans lequel le premier message comprend des informations de WLAN AP à proximité du terminal pour mettre à jour une deuxième liste de WLAN AP à la station de base, si la demande est reçue en provenance de la station de base ; et
dans lequel les informations sur au moins un WLAN AP inclus dans la première liste de WLAN AP sont sélectionnées dans la deuxième liste de WLAN AP sur la base des informations relatives à l'emplacement du terminal, dans lequel l'émetteur-récepteur est configuré pour effectuer la réception d'un message comprenant la liste de WLAN AP des WLAN AP à l'intérieur d'une cellule de la station de base et une force de signal reçu d'un signal transmis par la station de base qui est mesurée par au moins un terminal situé à l'intérieur de la cellule, le message étant un message de diffusion.

6. Terminal selon la revendication 5, dans lequel le premier message comprend au moins l'une d'une force de signal reçu d'un signal reçu en provenance du WLAN AP balayé, d'une largeur de bande utilisée par le WLAN AP, d'une force de signal reçu d'un signal reçu en provenance de la station de base, et de forces de signal reçu de signaux reçus en provenance de stations de base voisines.

7. Station de base d'un système de communication mobile, la station de base comprenant :
un émetteur-récepteur configuré pour effectuer la transmission d'un message de demande de balayage de point d'accès, AP, de réseau local sans fil, WLAN, proche à destination d'un terminal, et la réception d'un premier message comprenant des informations relatives à un emplacement du terminal en provenance du terminal ; et un organe de commande configuré pour commander à l'émetteur-récepteur d'effectuer la transmission d'un deuxième message comprenant une première liste de points d'accès, AP, de réseau local sans fil, WLAN, la première liste de WLAN AP comprenant des informations sur au moins un WLAN AP correspondant aux informations relatives à l'emplacement du terminal, dans laquelle la transmission du deuxième message comprend la diffusion d'un message comprenant la liste de WLAN AP des WLAN AP à l'intérieur d'une cellule de la station de base et une force de signal reçu d'un signal transmis par la station de base qui est mesurée par au moins un terminal situé à l'intérieur de la cellule ;
dans laquelle le deuxième message est configuré pour amener le terminal à effectuer une recherche de WLAN AP sur la base de la première liste de WLAN AP et des informations relatives à l'emplacement du terminal,
dans laquelle le premier message comprend des informations de WLAN AP à proximité du terminal pour mettre à jour une deuxième liste de WLAN AP à la station de base si la demande est transmise à destination du terminal, et
dans laquelle les informations sur au moins un WLAN AP inclus dans la première liste de WLAN AP sont sélectionnées dans la deuxième liste de WLAN AP sur la base des informations relatives à l'emplacement du terminal.

8. Station de base selon la revendication 7, dans laquelle le premier message comprend au moins l'une d'une force de signal reçu d'un signal reçu en provenance du WLAN AP balayé, d'une largeur de bande utilisée par le WLAN AP, d'une force de signal reçu d'un signal reçu en provenance de la station de base, et de forces de signal reçu de signaux reçus en provenance de stations de base voisines.
